# EUROPEAN PATENT APPLICATION

(11) **EP 0 964 559 A1**
(43) Date of publication of application: **15.12.1999**
(21) Application number: 98402712.8
(22) Date of filing: 30.10.1998
(51) Int. Cl.: H04L 29/06, H04L 12/28

(54) **Method for transmitting asynchronous data in a home network**

(30) Priority: 28.09.1998 EP 98402384; 08.06.1998 EP 98401372
(71) Applicant: THOMSON multimedia, 92100 Boulogne Billancourt (FR)
(72) Inventor: Bichot, Guillaume, 92648 Boulogne Cedex (FR); Straub, Gilles, 92648 Boulogne Cedex (FR); Fannechere, Nicolas, 92648 Boulogne Cedex (FR)
(74) Representative: Ruellan-Lemonnier, Brigitte

(57) **Abstract**

The invention concerns a method for transmitting data in a home communication network.

The network comprises a first device and a second device, wherein said first device includes means to produce a data packet and said second device includes means to use said data packet.

The inventive method is characterised in that it comprises the steps of:
- opening a connection between said first device and said second device;
- having said second device allocate a message buffer to said connection, said second device communicating the message buffer size to said first device;
- having said first device transmit said data packet to said second device, wherein said data packet is split and sent as payload in messages, where the size of the payloads is smaller or equal to said message buffer size.

The invention applies to home network communications.

## Description

The specification 'Home Audio/Video interoperability architecture version 0.8', also called 'HAVi' architecture, was disclosed on May 15, 1998 on the WEB sites of at least the following companies: Sony, Philips, Toshiba, Sharp and Hitachi.

This specification describes the implementation of a home network comprising consumer electronics devices and computing devices, and compatible with the IEEE 1394 1995 serial bus and the IEC 61883 interface standards.

The HAVi specification version 0.8 describes in its sections 3.2 and 5.2 an inter-device communication system referred to as the 'Messaging System'. The Messaging System, sometimes also called the 'Message Passing System', is a software object (a 'software element' according to the HAVi terminology) present in some device types of the network. It possesses an application programmable interface, comprising a number of functions, which can be accessed by a software element to send a message to another software element. When a software element calls a function of another software element of another device, the function called is mapped into a Messaging System message.

Messages use a predefined format which is described in section 3.2.1. of the HAVi document. A message contains two bytes defining the length of the message payload. The maximum length of a message is thus a little over 64 Kb: the maximum payload, to which the length of the header information is added.

The Messaging System of HAVi version 0.8 is well adapted for performing function calls and managing software element identifiers in the network. The inventors have recognized the following problem with the proposed architecture: when a sending software element sends a message to a receiving software element, the Messaging System does not take into account the memory capacity of the receiving software element. The receiving software element may encounter problems to process a huge amount of data if the buffer allocated to the communication by the receiving software element is not adequate. In other words, the HAVi 0.8 document does not enable the receiving software element to control the amount of data it receives.

The object of the invention is a method for transmitting data in a home communication network comprising a first device and a second device, wherein said first device includes means to produce a data packet and said second device includes means to use said data packet, said method being characterised in that it comprises the steps of:
- opening a connection between said first device and said second device;
- having said second device allocate a message buffer to said connection, said second device communicating the message buffer size to said first device;
- having said first device transmit said data packet to said second device, wherein said data packet is split and sent as payload in messages, where the size of the payloads is smaller or equal to said message buffer size.

The receiving device specifies the size of its message buffer at the beginning of the transmission, and the sending device takes into account this value in order to maintain a limited payload size.

The word 'device' is not limited in its significance to a physical device. It comprises among others software objects, and in particular 'software elements' as defined by the HAVi 0.8 document.

According to a particular embodiment of the invention, said payloads have a first maximum length independent of said first and second devices and wherein a second maximum length dependent of said second device is constituted by said message buffer size, the shortest of said first and second maximum lengths being retained for sending messages to said second device.

The first maximum message size is that given by the specification in itself: for instance, HAVi 0.8 gives 64 kilobytes as the maximum message size. The second maximum message size is that defined within the connection, i.e. the message size of the receiving device. This message size has to be used only in connection with messages sent to that particular receiving device, and through the particular connection.

The invention thus solves a problem inherent to the network presented in the HAVi 0.8 document, while being compatible with this document, and in particular with the Messaging System.

Other characteristics and advantages of the invention will appear in the description of a non-limiting embodiment, described with the help of the enclosed figures, among which:
- figure 1 is a block diagram of a home network;
- figure 2 is a block diagram of a device in the home network of figure 1;
- figure 3 is a diagram of an example of the software objects and layers implemented in the device of figure 2;
- figure 4 is a diagram of message exchanges between an entity producing a stream ('producer') and an entity receiving that stream ('consumer'), in the case the producer takes the initiative to send the stream;
- figure 5 is a diagram similar to figure 4, but in the case where the consumer takes the initiative to request a stream from the producer;
- figure 6 is a diagram of an exchange between two entities which are both producer and consumer in the frame of a same connection.

The present description uses a terminology defined in the following document, to which one should also refer for further details about the home network architecture: 'The HAVi Architecture - Specification of the Home Audio/Video interoperability (HAVi) Architecture' of May 11, 1998 Version 0.8 and publicly disclosed on May 15, 1998 on the WEB sites of at least the following companies: Sony, Philips, Toshiba, Sharp and Hitachi.

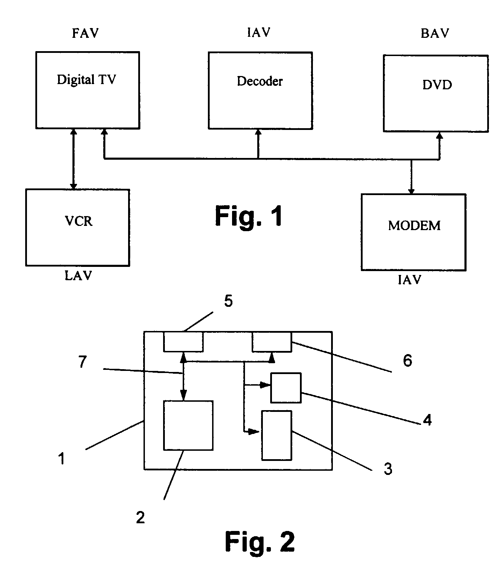

Figure 1 is a diagram of an example of a HAVi-compliant home network comprising all four types of devices defined by the HAVi 0.8 specification. The home network comprises a communication bus, which is a IEEE 1394 1995 serial bus according to the present example. To this bus are connected a digital television, a digital receiver/decoder, a modem, a Digital Video Disc recorder/player (DVD) and a Videocassette Recorder (VCR). The television receiver is a Full Audio/Video (FAV) device, which is the device type having the most functionalities according to the HAVi specification. In particular, the FAV type device has the capacity to execute HAVi runtime code. The television receiver can thus host the software to control the VCR, which in the present case is a Legacy device, i.e. a device having no HAVi functionality. The Legacy device is connected directly to the Full Audio/Video device, since it does not have a bus connector or the necessary means to communicate on the bus. The digital decoder and the modem are Intermediate Audio/Video (IAV) devices, which have many of the features of the FAV device, but not the capability to download software to control other devices. Such software may nevertheless be resident in an IAV device. Lastly, the DVD player is a Basic Audio/Video device, which does not have the means to run HAVi code, but has at least the capacity to connect to the communication bus and to communicate with a IAV or FAV device which runs the software interface between the HAVi environment and the Basic Audio/Video device's own environment.

Figure 2 is a block diagram of the television receiver's components related to its HAVi functionalities. The television receiver 1 contains a microprocessor 2, connected to a RAM memory 3 and a reprogrammable ROM memory 4 through an internal bus 7. The ROM is used to store the receiver's software elements and other code for managing the device's functionalities executed by the microprocessor. The television receiver also contains a connection 5 to the IEEE 1394 bus, the connection comprising a physical/link circuit (and the software required for the asynchronous transaction and bus management layers. The television receiver also comprises a connector 6 destined to control and exchange Audio/Video streams with a specific device, in this case the VCR of figure 1.

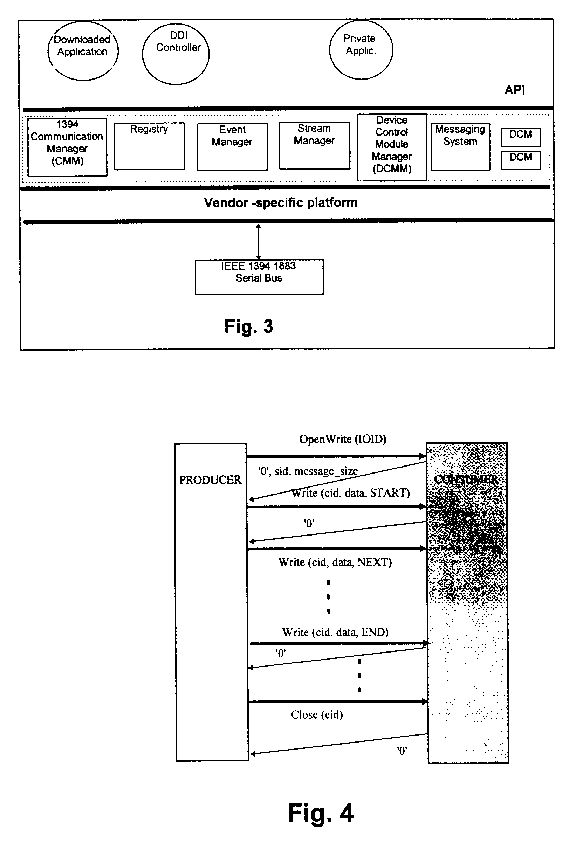

Figure 3 shows the organisation of software objects ('software elements' according to the HAVi terminology) in the television receiver, and more generally in a FAV-type device.

The television receiver hosts a number of applications and device control applications which interact with the following software elements through corresponding application programmable interfaces:
- a 1394 Communication Media Manager, which allows other software elements to perform asynchronous and isochronous communication over the IEEE 1394 bus,
- a Message Passing System, for exchanging messages with other software elements,
- an Event Manager for managing object state changes,
- a Stream Manager for managing Audio/Video data streams between functional components, such as a tuner and a recording device,
- a Registry, which keeps a list of local software elements and its identifiers and manages communication with distant registries,
- a Device Control Module Manager (DCMM), for loading or deleting Device Control Modules (DCM),
- a number of either resident or uploaded Device Control Modules.

The resident application of figure 3 is in the present case an Electronic Program Guide, while one of the Device Control Modules (DCMs) has been installed to control the VCR of figure 2, and another DCM has been downloaded from the DVD player.

A device control module may control one or more Functional Control Modules, also called FCMs. An FCM is a software element which gives control over a specific function of a device through a well known function set, comprising groups of functions called Application Programmable Interfaces, or APIs. In a digital television receiver/decoder, FCM APIs would typically be dedicated to the control of the tuner and the video/audio decoder.

According to the present embodiment, an Asynchronous Data API is defined. This API, or a part thereof, is to be included into the FCMs which require the capability of managing the transfer of asynchronous data streams between a producer and a consumer.

The terms 'producer' and 'consumer' are used to designate the capability of a device or functional component to produce an asynchronous stream or to receive such a stream. Consumers and producers may be storage devices, but this is not necessarily so.

A digital stream demultiplexer demultiplexing service information is a producer. A recording device (for instance a memory, a magneto-optical disk, a hard disk or a digital video cassette recorder) can also be a producer. A piece of software generating or processing data may also be a producer.

Examples of consumers can also be given: a recording device playing back information, a printer or a display device.

The notions of producer and consumer are not exclusive: some devices or functional components may have both functions within a same connection. An example of such a device is a modem connected to the public switched telephone network for accessing internet services. Seen from the HAVi network, the modem can act as a consumer, i.e. by accepting data from a client application for transmission to an internet server, or it may act as a producer, when transferring data from the internet server to the client application. The client application is also both a producer and a consumer in this case.

The term 'asynchronous data stream' is used to make a distinction with the 'isochronous data streams', i.e. the audio and video streams handled by the Stream Manager defined by the HAVi document. Typically, asynchronous data consists in data corresponding to a picture, a file or program code. An FCM implementing the functions explained in detail below will remain compatible with the Messaging System (as defined in the HAVi version 0.8 document) while correcting the deficiencies described in the introduction.

An FCM can manage one or more containers, a container being the general term to designate a consumer, a producer or an entity having both functions. If an FCM contains more than one container, then each container is identified by a unique label. Such a label is redundant if only one container is present, but can, according to a variant of the invention, nevertheless be implemented for system uniformity reasons.

The Asynchronous Data API is defined by the parameters and functions given below. Depending on whether an FCM is simply a consumer, a producer or both, the appropriate subsets of functions have to be implemented.

The term 'in' used in the function definitions defines parameters which are passed by the software element calling the function to the software element which receives the function call, while the term 'out' defines parameters sent back by the software element receiving the function call.

### (a) The FileLoc parameter

This parameter indicates whether a message from a producer to a consumer is the first message, an intermediate message or the last message of a contiguous series of messages. The conditions of use of such series of messages will be explained be described later in relation with figures 4 to 6.

The parameter is defined as follows:
enum FileLoc { START, NEXT, MIDDLE};

### (b) The Container parameter

It defines the characteristics of a container. For example, a container containing program files will be defined by its identifier ('ioid'), the names of files it contains, the file types and the sizes of the files.

The parameter is defined as follows:

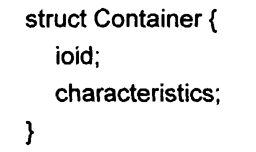

### (c) The OpenRead function

This function is implemented within an FCM which is only a producer. It is called by a consumer to request the transfer of an asynchronous stream from a container . It is defined as follows:

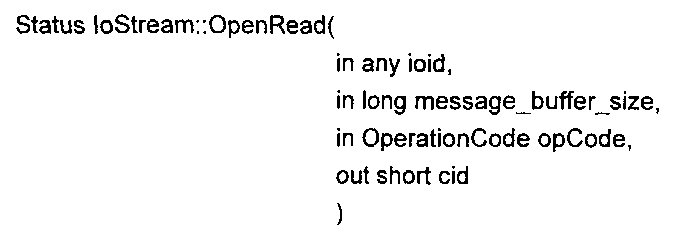

'Status^{'} is the type of the function return value.

The following parameters are used by the OpenRead function:
- ioid : This is the identifier of the container to be opened. It is not mandatory if the FCM which implements the function has only one container and will be ignored by that FCM if nevertheless present in the function call.
- message_buffer_size : This parameter indicates the maximum size of a message accepted by the consumer, excluding the messaging system overhead (i.e. the header and other data related to the messaging system layer). The producer will take into account that parameter to determine the length of its message payloads to the consumer. Preferably, the length of the payloads will be equal to the message buffer size of the consumer.

The message buffer size is either fixed or can be allocated dynamically by the calling software element on the basis of available memory resources when the connection is to be established. For the OpenRead function, the consumer takes the initiative to establish the connection, and so the message buffer size passed as a parameter in the OpenRead function is the size of the consumer message buffer.
- opCode : this parameter is a code the producer will use to send the stream to the consumer. This operation code identifies a function of the consumer which the producer has to call to forward a response to the client. This parameter is set by the consumer. The operation code uniquely identifies a function within a software element. In this case, it is the 'Write' function, as defined below. The unique address of a function in the network thus comprises the 'SEID' identifier and the operation code .
- cid : This parameter identifies a given connection between the producer and the consumer, since there may be more than one such connection. Its value is defined by the producer, and is different from all other such identifiers used by the same producer at a given moment, in order to uniquely identify each connection.

One of the following values is returned by the 'OpenRead' function call:
'0' if the call has been a success
'1' if the container identifier was not correct
'2' if the container could not be accessed. This can happen for example if too many read accesses are made over several connections at the same time.

### (d) The OpenWrite function

This function is implemented in FCMs which are only consumers. It enables a producer to send an asynchronous stream to container of a consumer's FCM. .

It is defined as follows:

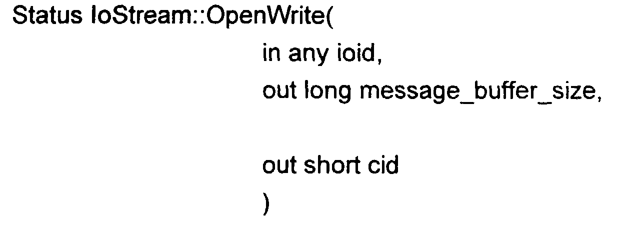

The following parameters are used, in addition to those which have already been defined:
- ioid,
   message_buffer_size : indicates the maximum size of a message payload accepted by the consumer. The producer will take into account that parameter during the sending of the data and until a close request.
   cid : This parameter identifies the connection. In the case of the OpenWrite function, it is the called FCM which defines the value of the cid parameter.

The function returns one of the following values:
'0' if the function call is successful,
'1' if the container identifier 'ioid' sent in the function call is not correct,
'2' if the container identified by the 'ioid' identifier cannot be accessed.

### (e) The Open function

This function is implemented in FCMs which act both as a consumer and as a producer in the frame of a same connection.

It enables a consumer/producer to receive/send an asynchronous stream from/to a container.

It is defined as follows:

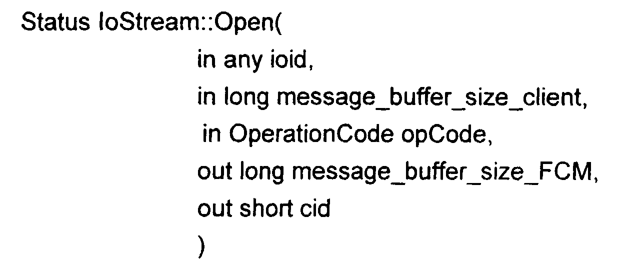

The following parameters are used :
- ioid,
- message_buffer_size_client : This parameter indicates the maximum size of a message accepted by the client application which calls the FCM function. When the called FCM is a producer, it will take that parameter into account for the sending of the data to the consumer (i.e. the client application) and until a close request.
- message_buffer_size_FCM : This parameter indicates the maximum size of a message accepted by the FCM. When the clients application acts as a producer, it will take that parameter into account during the sending of the data to the consumer (i.e. the FCM) and until a close request.
- opCode : this parameter is the code which the FCM will use to send the asynchronous stream to the client application (which will act as a consumer). This operation code identifies a function of the client application API which the producer has to call to forward asynchronous data to the client. In this case, it is the 'Write' function, as defined below. The unique address of a function in the network thus comprises the 'SEID' identifier and the operation code .
   cid : This parameter identifies the connection. It is determined and delivered by the FCM.

The function returns one of the following values:
'0' if the function call is successful,
'1' if the container identifier 'ioid' sent in the function call is not correct,
'2' if the container identified by the 'ioid' identifier cannot be accessed.

### (e) The Write function

The Write function is the function which has to be called by a producer to transfer data to a consumer. The producer has to wait for the return value of the Write function before calling this function a new.

This function is implemented at the consumer side. Its operation code is a well-known operation code when the FCM acts as a consumer, because the operational codes of the functions of the Asynchronous Data API are predetermined. In case a client application acts as a consumer, the operation code is sent to a producer as a parameter through the OpenRead or the Open function call by a consumer, because the Asynchronous Data API is not necessarily implemented by the client application. It is assumed here that the client application implements the Write function, although any proprietary function achieving similar results may be used.

The Write function is defined as follows:

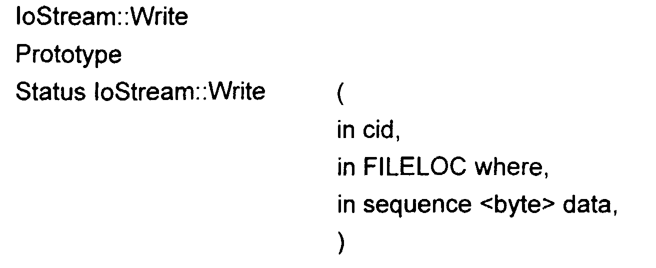

In addition to the parameters which have already been defined for the other functions, the following parameters are used by the Write function:
- where : This parameter informs the consumer that a message is the first, the last or an intermediate message among a series of messages for transferring a stream,
- data : This is the payload of the message, i.e. a part of the stream to be transferred.

The Write function returns one of the following return values:
'0' if the consumer requests further messages,
'1' if the consumer needs to inform the producer that it should abort the transfer.

### (f) The Dir function

This function returns the list of identifiers of containers of an FCM. If the FCM manages only one default container, then the function need not be implemented.

According to a variant of the present embodiment, this function also returns other characteristics of each container (such as for example type of storage element, total space available, free space available, list of files etc...)

The function is defined as follows:

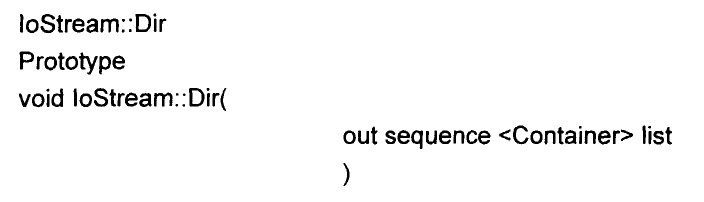

The 'list' parameter is the list of containers managed by the FCM. As described above, a container is identified by its 'ioid' identifier. The list can be empty. This means that the FCM handles only one container.

### (g) The 'Close' function

This function enables a consumer or a producer to close a previously opened connection, identified by the 'cid' parameter. The connection can only be closed by the client application which opened it.

A software element does not necessarily need to close a connection after a stream transfer has been achieved. It can keep the connection open and transfer further streams through that connection.

The function prototype is defined as follows:

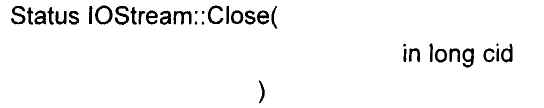

The only parameter is the 'cid' parameter, i.e. the identifier of this connection.

The receiving FCM acknowledges with one of the following status values:
0: The connection has been closed successfully,
1: The transmitted value of the 'cid' parameter is unknown.

Figure 4 illustrates the message flow between a consumer and a producer when the producer takes the initiative to send a stream.

A producer, for example the decoder of figure 1, requests its Messaging System to call the OpenWrite function of a consumer, for example the display of the digital television receiver of figure 1, in order to prepare the display to show a still picture which the decoder has demultiplexed and decompressed. The decoder has obtained the identifier of the Display FCM from its local Registry service, by requesting a list of all display devices in the network, and has decided to use the display of the digital television receiver. For this purpose, the Display FCM run by the Full Audio/Video device of the network of figure 1 comprises the required functions from the Application Programmable Interface defined above, i.e. the Open, Write and Close functions.

More details about the Registry service are given in the French patent application FR 9805110 filed on April 23, 1998 in the name of THOMSON multimedia.

The consumer acknowledges the request for opening a connection by returning the value '0', and passing the corresponding parameter values, i.e. the connection identifier 'cid', the size in bytes of the message buffer allocated to this connection and the operational code of the Write function, which is in principle not known by the producer. The producer will then proceed to transfer its data, adequately distributed over a number of messages in such a way that none of the message payloads is longer than the specified message buffer size.

The producer will first make a Write function call in which the 'where' parameter has the value START, using the operational code previously received from the consumer. The 'START' value indicates that the message is the first message of a series of messages in which a piece of data greater than the consumer's message buffer size is transferred. According to the preferred embodiment, the producer strives to use for each of its message payloads the maximum message length authorised by the consumer's message buffer size in order to reduce the overall number of messages required. In other words, the payload size is equal to the specified consumer buffer size if enough data remains to be sent. If the buffer size specified by the consumer is greater than the limit defined by the HAVi document (i.e. 64 kilobytes in the version 0.8), then the payload size of the messages is limited to that size.

The producer will also include part of the data to be transferred into this first message. Subsequent messages will use the value 'NEXT' for the 'where' parameter, to indicate intermediate messages in the series of messages. The last message will use the 'END' value.

The producer will send messages only after having received a proper acknowledgement ('0' return value') for each Write function call it performs.

When all data has been transferred, the producer calls the Close function to close the connection with the consumer.

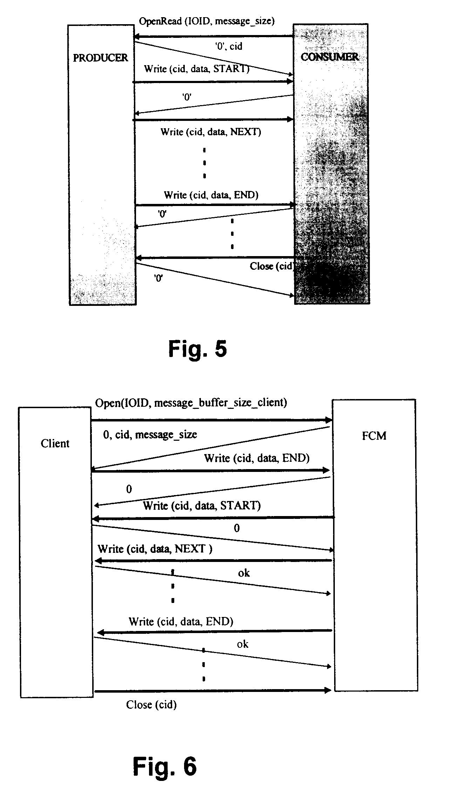

Figure 5 illustrates the case where a consumer takes the initiative to open a connection, calling the 'OpenRead' function of a producer's FCM. Apart from the parameters which differ between the OpenRead function and the OpenWrite function, the mechanism is similar to the one explained in connection with figure 4.

Figure 6 illustrates the case in which a consumer-producer client application initiates a full duplex connection with a consumer-producer FCM. According to the present embodiment, the FCM manages a modem associated with a single container.

The client application opens the connection with the FCM providing as a parameter its maximum buffer size to handle incoming messages.. In response, the FCM initialises the modem, connects to a given server using predetermined settings (phone number, connection name, password...) confirms the opening of the connection to the client application (by transmitting the '0' status value) and transmits, among other parameters, its maximum message buffer size and the identifier of the connection (cid),.

The client's application then sends a first request (which according to the present example fits into one message payload to the FCM. The FCM forwards the payload content through the modem access and acknowledges the transmission to the client application. The server processes the request and sends it back a response. The FCM receives the response flow and forwards it to the client application using several messages, distributing the response over the payloads of the messages according to the maximum buffer size of the client application. The transfer of data continues until all data is transferred. The communication between the client application and the FCM continues according to a predefined protocol between the client application and the remote server.

According to this protocol, the client application hen closes the connection.

European patent application 98402384.6 filed on September 28, 1998 in the name of the Applicant and whose priority is claimed concerns an internet access functional component module.

## Claims

1. Method for transmitting data in a home communication network comprising a first device and a second device, wherein said first device includes means to produce a data packet and said second device includes means to use said data packet, said method being characterised in that it comprises the steps of:
- opening a connection between said first device and said second device;
- having said second device allocate a message buffer to said connection, said second device communicating the message buffer size to said first device;
- having said first device transmit said data packet to said second device, wherein said data packet is split and sent as payload in messages, where the size of the payloads is smaller or equal to said message buffer size.

2. Method according to claim 1, characterised in that said payloads have a first maximum length independent of said first and second devices and wherein a second maximum length dependent of said second device is constituted by said message buffer size, the shortest of said first and second maximum lengths being retained for sending messages to said second device.

3. Method according to claims 1 or 2, characterised in that said connection is opened by said first device through a function call sent to said second device for writing data to said second device.

4. Method according to claims 1 or 2, characterised in that said connection is opened by said second device through a function call sent to said first device for reading data from said first device.

5. Method according to one of the claims 1 to 4, characterised in that said first device comprises at least one data storage element for storing said data packet.

6. Method according to claim 5, characterised in that said device comprises more than one storage element, each of said storage elements being identified by an identifier.

7. Method according to one of the claims 1 to 6, characterised in that said second device comprises at least one data storage element for storing said data packet.
